# EUROPEAN PATENT SPECIFICATION

(11) **EP 3 374 948 B1**
(45) Date of publication and mention of the grant of the patent: **04.12.2019**
(21) Application number: 17746130.8
(22) Date of filing: 02.08.2017
(51) Int. Cl.: G06Q 10/08, G06Q 10/10, G06Q 30/00, G06Q 50/00, G06Q 50/10

(54) **APPARATUS FOR MAKING A GOODS SALES OFFER**
VORRICHTUNG ZUR ERSTELLUNG EINES WARENVERKAUFSANGEBOTS
APPAREIL DE RÉALISATION D'UNE OFFRE DE VENTE DE MARCHANDISES

(30) Priority: 22.09.2016 IT 201600095426
(43) Date of publication of application: 19.09.2018
(73) Proprietor: OVS S.p.A., 30174 Venezia Mestre (Venezia) (IT)
(72) Inventor: BERALDO, Stefano, 30174 Venezia Mestre (Venezia) (IT)
(74) Representative: Rapisardi, Mariacristina
(86) International application number: PCT/EP2017/069515
(87) International publication number: WO 2018/054586

(56) References cited:
- CN-A- 101 819 663
- CN-A- 103 914 609
- CN-U- 203 168 116
- JP-A- 2002 058 045

## Description

The present invention relates to an apparatus for making a goods sales offer.

In particular the invention relates to a preferred sector of application regarding large stores.

Prior art's CN 203168116 U utility model discloses moving type three-dimensional scanning equipment which comprises a scanning cabin, cameras and projectors, JP 2002058045 A discloses a system and a method for entering real object into virtual three-dimensional space, CN 101819663 A relates to a system for virtually trying on clothes, which provides the cloth dressing effect with high third dimension for each independent customer in on-line shopping, while CN 103914609 A discloses a device for trying on clothes for a clothing shop, where the device comprises a computer and an image pick-up device.

Generally, in large stores, small changing rooms are provided for trying on clothes, provided with mirrors, exclusively for the purpose of providing customers with a visual indication of the garments when worn, to see whether the garments are to the customer's personal taste.

The customer is obliged to carry a maximum pre-determined number of garments to be tried on into the changing room, with the consequence that even only for changing a size, he or she is forced to exit the changing room and queue again before regaining entry.

The outcome of the test can be negatively influenced by the ambience in the changing room, in particular by the lighting conditions and/or by the colour and/or furnishing of the changing room walls.

The technical aim of the present invention is, therefore, to realise an apparatus for a sales offer of goods that is adapted for interacting with customers so as to improve the customer's ability to exploit the goods that are on sale.

Within the scope of this technical task, an object of the invention is to provide an apparatus for making a goods sales offer adapted for optimising customers' buying times.

A further aim of the invention is to provide an apparatus for making a goods sales offer adapted for modifying and in particular enriching the traditional buying experience for customers.

A further aim of the invention is to provide an apparatus for making a goods sales offer that is orientated not only for sales but also for entertainment.

The technical task set, as well as these and other aims, according to the present invention, are attained by realising an apparatus for making a goods sales offer, characterised in that it comprises a server connected to the internet, an internet portal for goods offered for sale, a database connected to said server in which are stored codes of the goods offered for sale in said portal and at least access statistics of the users of the portal to the codes of the goods offered for sale in said portal, an electronic processor connected to said server, a changing room delimiting a user stationing area, a monitor installed in said changing room and connected to the processor, at least two webcams having opposite frame views of said stationing area and connected to said processor, a reader of goods code, installed in said changing room and connected to said processor, and automatic activating and deactivating means of a goods sales offer session on said monitor, said monitor having a touch screen for receiving inputs from the users present in the changing room, said monitor further exhibiting at least a mirror mode in which it selectively displays in real-time the image captured by said first or second webcam and at least a display mode of goods offered for sale.

Said processor is further advantageously programmed so that during a goods sales offer session, upon receiving an input by said users on the touch screen following acquisition of a good code by said reader, said data base is automatically interrogated in real time, from which data base goods codes are automatically extrapolated which have, in said statistics, a similarity criterion with the acquired goods code, and on the screen, in said display mode, also the goods corresponding to said extrapolated goods codes are automatically displayed for the sales offer. Further characteristics and advantages of the invention will become more clearly evident from the following description of a preferred but non-limiting embodiment of the system and apparatus for making a goods sales offer according to the invention, illustrated in the appended drawings, in which:

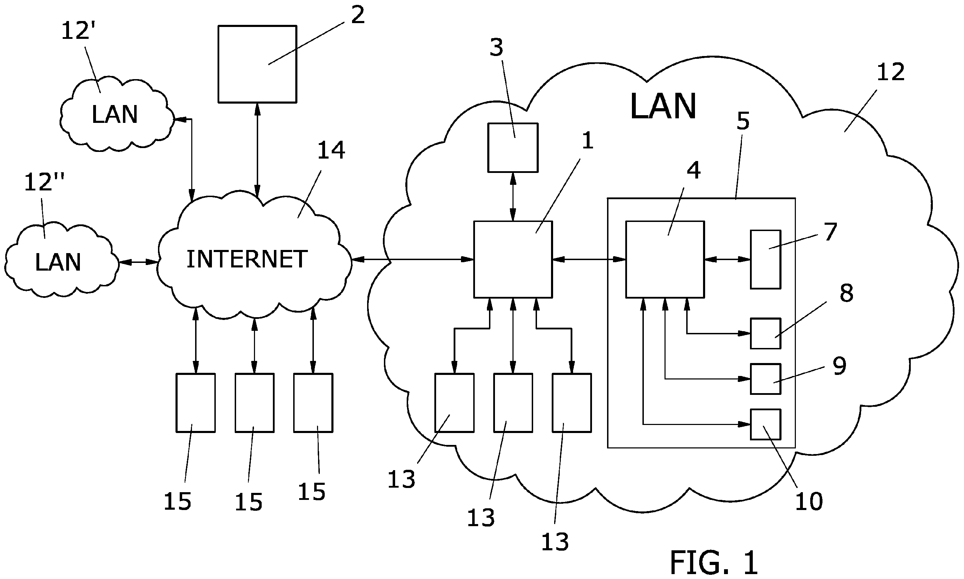

Figure 1 is a schematic illustration of the apparatus for goods sales in its entirety; and

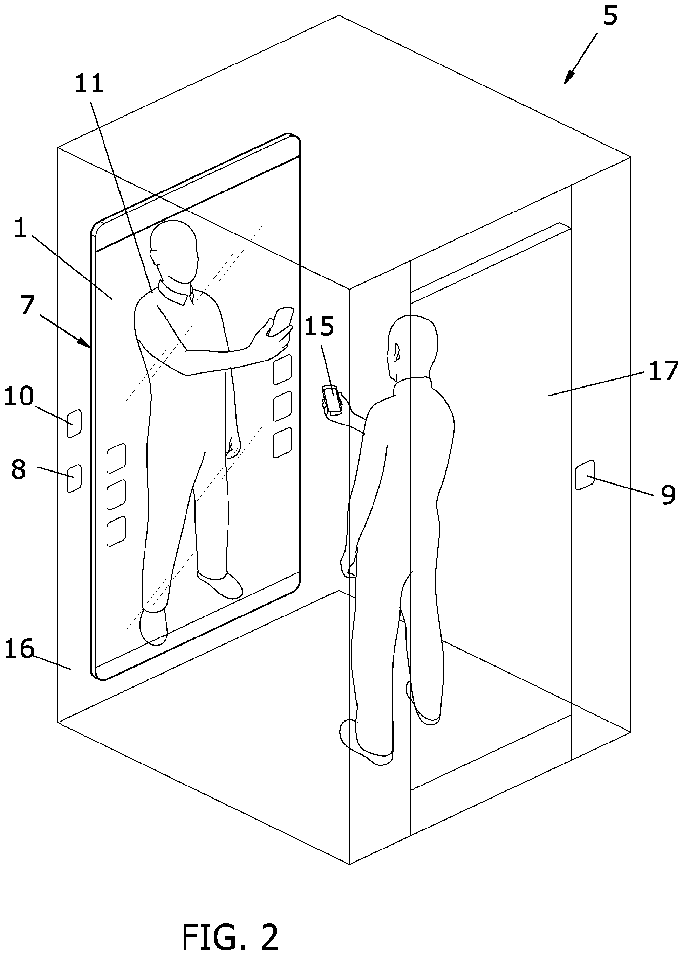

Figure 2 is a schematic representation of the changing room of the apparatus of figure 1.

The apparatus for making a goods sales offer comprises a server 1 connected to the internet 14, an internet portal 2 for goods offered for sale, a database 3 connected to the server 1 in which are stored codes of the goods offered for sale in said portal 2 and at least access statistics of the users of the portal 2 to the codes of the goods offered for sale in the internet portal 2, an electronic processor 4 connected to the server 1, a changing room 5 delimiting a user stationing area 6, a monitor 7 installed in the changing room 5 and connected to the processor 4, at least two webcams 8, 9 having opposite frame views of the stationing area 6 and connected to the processor 4, a reader 10 of goods codes, installed in the changing room 5 and connected to the processor 4, and automatic activating and deactivating means of a goods sales offer session on the monitor 7.

The monitor 7 has a touch screen 11 for receiving inputs from the users present in the changing room 5.

In particular the monitor 7 with the touch screen 11, the reader 10 and the first webcam 8 are installed on a same wall 16 of the changing room 5 while the second webcam 9 is installed on an opposite wall 17 of the changing room 5.

The reader 10, by way of example, can be an optic reader such as a scanner suitable for reading goods codes in the form of barcodes.

The monitor 7 includes at least a mirror mode in which it selectively displays in real-time the image captured by the first webcam 8 or second webcam 9 and at least a display mode of goods offered for sale.

The processor 4 is programmed so that during a goods sales offer session, upon receiving an input by the users on the touch screen 11 following acquisition of a good code by the reader 10, the data base 3 is automatically interrogated in real time, from which data base 3 goods codes are automatically extrapolated which have, in the statistics, a similarity criterion to the acquired goods code, and, in the display mode, the goods corresponding to the extrapolated goods codes are also automatically displayed on the screen 11 for the sales offer.

The automatic activating and deactivating means of a session for making a goods sales offer preferably comprises the webcams 8, 9 which enable activation of the session when they detect a presence of users in the changing room 5 and deactivation of the session when they detect an absence of users in the changing room 5.

The server 1 and the processor 4 are included in a LAN (Local Area Network) 12 installed in the same commercial concern in which the changing room 5 is located.

The LAN 12 is in particular a WLAN (Wi-Fi Local Area Network) which connects the server 1 to mobile electronic devices 13 of operators of the commercial concern.

The LAN 12 is in turn included in a WAN (Wide Area Network) which, via the internet, connects a plurality of LAN 12, 12', 12" installed in corresponding commercial concerns belonging to a single business.

The server 1 advantageously has an interfacing program to interface with a mobile application installed in mobile electronic devices 15 of users of the commercial concern.

Some functions of the apparatus 1 are only obtainable via an internet connection.

For this purpose the apparatus 1 can provide customers of the commercial concern with special WiFi access to the Internet.

The interfacing program is configured at least for acquisition of selfie photographs by means of the webcams 8, 9 and transmission thereof to the mobile electronic devices 15 of the users of the commercial concern.

The server 1 or the electronic processor 4 further have an augmented-reality software program.

The augmented-reality software program is configured for superposing, on the image captured by the webcam 8, 9, a dynamic background or a static background and, at least also for attaching a virtual element (for example as we shall see in the following a virtual garment) on a dynamic element (for example, as will be described in the following, a user) of the captured image.

In the following some of the functions that can be realised with the apparatus 1 are illustrated in greater detail.

### Start-up and termination of a sales session

The preferred way of managing these functions, as mentioned, is to detect and consequently manage the "changing room empty" and "new user in changing room" statuses, with the use of the webcam 8, 9 for closing and starting-up, respectively, a session of use of the changing room 5. Other initiatives or interactions can be associated to these statuses. For example, when a new user enters the changing room 5 he or she can be greeted with a message on the touch screen 11 of the monitor 7 or promotional messages can be displayed for x seconds from the entry of the user or up to when he or she explicitly closes the message.

Other automatic reset modes of the user session can be implemented, for example by using a video timeout within which operations such as checkout can be completed, and so on.

### Virtual backgrounds

Virtual backgrounds graphically enrich the user's experience.

Virtual backgrounds are loaded on the server 1 or on the electronic processor 4.

The virtual backgrounds can be, as mentioned, static images or videos which the user can choose from those available while in the changing room 5.

When the user enters the changing room 5 the monitor 7 is in mirror mode with a real background. When the entry of a user is detected, the touch screen 11 of the monitor 7 displays a welcome message and the commands for the changing room 7 are also displayed. The basic "reflected" image therefore does not show any virtual background.

With a tap on a special background-change icon on the touch screen 11 of the monitor 7, a "cover-flow" gallery showing the available virtual backgrounds is opened. The user can swipe right or left on the touch screen 11 of the monitor 7 to select one and this is shown as the background in place of the actual changing room 5.

At this point the user can simply choose to be reflected or instead can take a photograph of him- or herself, using the "selfie" function.

Once a selfie has been taken, the user can decide to try another garment on, but in order to assess it better the set background needs to be taken down. With a tap on the special button shown on the touch screen 11, the background is removed and the monitor 7, still in mirror mode, resorts to projecting the image of the changing room 5.

The addition of a virtual background, due to its own nature, can also be used as a base for the selfie function. In this case only static images will be utilisable for the purpose.

### Purchasing from the changing room

The user can proceed to buy on-line (checkout) directly from the changing room, by creating a virtual trolley to which he or she can add the desired garments.

The user enters the changing room 5 with one or more garments and tries them on.

The user scans the barcode of one or more garments using the reader 10 and taps on the appropriate icon on the touch screen 11 of the monitor 7 to select the display mode of the goods offered for sale.

At this point, the server 1, in real-time, automatically interrogates the database, from which data base 3 goods codes are automatically extrapolated which have, in the statistics, a similarity criterion to the goods code acquired by the reader 10, and the goods corresponding to the extrapolated goods codes are also automatically displayed on the touch screen 11 of the monitor 7 for the sales offer. The similarity criterion with which the other goods codes are extrapolated can be, for example, the goods codes which other users of the internet portal 2 have most often visited in the same access session to the internet portal 2, together with the goods code acquired by the reader 10.

Therefore a series of correlated goods are brought up on the touch screen 11 of the monitor 7, which the user can utilise to make choices.

As the user navigates among the goods, the user can select one with a tap on the image, thus opening a page with further details. As well as the detailed characteristics of the good, its availability in the present commercial concern is flagged, with the possibility of adding the good to the virtual trolley.

The user can decide to buy the good all the same, even if it is not materially available in the present commercial concern, and selects the size and colour, and lastly, if the size and the colour are available, creates a new virtual trolley by tapping on the icon of the touch screen 11 of the monitor 7.

If he or she desires to continue with the purchases, the user scans the barcode of another good, and repeats the same procedure to add it to the trolley.

Lastly, the user proceeds with the on-line purchase by viewing the trolley appearing on the touch screen 11 of the monitor 7, where a code also appears, for example a QR code, which once read by the app installed on the user's smartphone 15, enables the transfer of the trolley onto the user's smartphone 15 to complete the checkout.

The good will then be consigned to the user according to the modes selected during the checkout. The addition of goods to the virtual trolley can also take place starting from garments tried on virtually.

The user can also pass the selected goods to the app installed on the user's smartphone 15 in the form of a wishlist.

In this case, the selected goods are not added to the virtual trolley for purchase.

Instead of proceeding to purchasing on-line, or on starting up a wishlist, the user can decide to pass the selected goods directly to the app on the mobile electronic device 13 of an operator of the commercial concern dealing with sales, and request that the selected garments be brought directly to the changing room. For example, the sales operative receives a push notification on his or her iPad, takes charge of the notification, with a confirmation of this fact is automatically sent to the smartphone 15 of the user, who in the meantime waits in the changing room.

In a case where, in the present commercial concern, a size or colour of a good selected by the customer is not present, the touch screen 11 of the monitor 7 can automatically bring up any eventual availability of the good in other shops interrogated by the server 1 that are connected on-line.

### Enriching the experience for children

The user's experience, in the case of children, can be enriched by measuring their height with the aid of the webcams 8, 9 and a special application installed on the electronic processor 4.

The detections can have statistical purposes and remain anonymous.

The information collected by the measuring system can be used for providing the suggested sizes and any goods suggestions.

Another application for children includes dynamically applying a virtual object such as for example a gadget to the image of the user reflected on the touch screen 11 of the monitor 7.

By tapping on a special icon on the touch screen 11 of the monitor 7 in the mirror configuration, the gallery of virtual objects opens up, from which the child can choose, again by tapping on an icon of the touch screen 11 of the monitor 7, the virtual object he or she wishes to "wear".

Once the choice has been made the monitor 7 returns into the mirror mode and the virtual object is applied to the reflected image, which follows the movement of the child around the changing room.

### Virtual try-out of goods

The user enters the changing room and as well as the other functions, the touch screen 11 of the monitor 7 displays, in the foreground, the opportunity to try on garments without physically putting them on. With a tap on the special icon on the touch screen 11 of the monitor 7, the user starts up a wizard, and on the touch screen 11 of the monitor 7 there appears a catalogue of the available garments in the form of a gallery of images of garments being worn.

The user swipes to consult the catalogue until he or she finds a garment he or she likes and selects it by tapping on a special icon on the touch screen 11 of the monitor 7.

A page then opens, dedicated to the chosen garment and which includes some information relating to the garment and the choice of the colour and/or the weave of the material. Having chosen the colour and/or the weave, the user starts up the virtual try-out, the page showing the product is minimised by the side of the screen and the image captured by the videocameras with the garment in 2D applied to the body of the user is displayed on the touch screen 11 of the monitor 7.

After viewing him or herself on the mirror the user can decide to change colour and/or weave; then the user re-opens the product page by tapping on a special icon on the touch screen 11 of the monitor 7, and enters the changes and newly starts up the virtual try-out.

At this point the user can decide to share the image with friends and by tapping on a special icon on the touch screen 11 of the monitor 7 takes a selfie.

Before proceeding, the user can try out the garment for real so as to identify the exact size. The user, from the page produced, can consult a guide to sizes and can therefore consequently select the right size for him or her. By tapping on the special icon on the touch screen 11 of the monitor 7, the user can send a request to the app on the portable electronic device 13, for example an iPad, of an operative charged with sales of the commercial concern so as to have a requested garment in the changing room.

The apparatus for making a goods sales offer as conceived herein is susceptible to numerous modifications and variants, all falling within the scope of the inventive concept; furthermore, all the details are replaceable by technically equivalent elements.

## Claims

1. Apparatus for making a goods sales offer, which comprises a server (1) connected to the internet (14), an internet portal (2) for goods offered for sale, a database (3) connected to said server (1) **characterized in that** in said server (1) are stored codes of the goods offered for sale in said portal (2) and at least access statistics of the users of the portal (2) to the codes of the goods offered for sale in said portal (2), said apparatus further comprising an electronic processor (4) connected to said server (1), a changing room (5) delimiting a user stationing area (6), a monitor (7) installed in said changing room (5) and connected to the processor (4), at least two webcams (8, 9) having opposite frame views of said stationing area (6) and connected to said processor (4), said first webcam (8) being installed on a same wall (16) of said room (5) where said monitor (7) is installed while said second webcam (9) being installed on an opposite wall (17) of said changing room (5), a reader (10) of goods codes, installed in said changing room (5) and connected to said processor (4), and automatic activating and deactivating means of a goods sales offer session on said monitor (7), said automatic activating deactivating means comprising said webcams (8, 9) which enable activation of the session when they detect a presence of users in the changing room (5) and deactivation of the session when they detect an absence of users in the changing room (5), said monitor (7) having a touch screen (11) for receiving inputs from the users present in the changing room (5), said monitor (7) further exhibiting at least a mirror mode in which it selectively displays in real-time the image captured by said first or second webcam (8, 9) and at least a display mode of goods offered for sale, said server (1) having an interfacing program to interface with a mobile application installed in mobile electronic devices (15) of users, said interfacing program being configured at least for acquisition of selfie photographs by means of said webcams (8, 9) and transmission thereof to said mobile electronic devices (15) of said users, where the selfies photographs are received in/by the mobile application installed..

2. Apparatus for making a goods sales offer according to claim 1, **characterized in that** said processor (4) is programmed so that during a goods sales offer session, upon receiving an input by said users on the touch screen (11) following acquisition of a good code by said reader (10), said data base (3) is automatically interrogated in real time, from which data base (3) goods codes are automatically extrapolated which have, in said statistics, a similarity criterion with the acquired goods code, and on the screen (11), in said display mode, also the goods corresponding to said extrapolated goods codes are automatically displayed for the sales offer.

3. Apparatus for making a goods sales offer according to any preceding claim, **characterized in that** said server (1) and said processor (4) are included in a LAN (Local Area Network) installed in a commercial concern.

4. Apparatus for making a goods sales offer according to the preceding claim, **characterized in that** said LAN (12) is a WLAN (Wi-Fi Local Area Network) which connects said server (1) to mobile electronic devices (13) of operators of said commercial concern.

5. Apparatus for making a goods sales offer according to any preceding claim 4 and 5, **characterized in that** said LAN (12) is included in a WAN (Wide Area Network) which, via the internet, connects a plurality of LAN (12, 12', 12") installed in corresponding commercial concerns.

6. Apparatus for making a goods sales offer according to any preceding claim, **characterized in that** said server (1) or said electronic processor (4) have an augmented reality software configured for superposing a dynamic background on said captured image.

7. Apparatus for making a goods sales offer according to any preceding claim, **characterized in that** said server (1) or said electronic processor (4) have an augmented reality software configured for superposing a static background on said captured image.

8. Apparatus for making a goods sales offer according to any preceding claim, **characterized in that** said server (1) or said electronic processor (4) have an augmented reality software configured for hooking a virtual element on a dynamic element of said captured image.

## Patentansprüche

1. Vorrichtung zur Erstellung eines Warenverkaufsangebots, das einen mit dem Internet (14) verbundenen Server (1), ein Internetportal (2) für zum Verkauf angebotene Waren, eine mit dem Server (1) verbundene Datenbank (3) umfasst, **dadurch gekennzeichnet, dass** im Server (1) Codes der im Portal (2) zum Verkauf angebotenen Waren und mindestens Statistiken des Zugriffs der Benutzer des Portals (2) auf die Codes der in dem Portal (2) zum Verkauf angebotenen Waren gespeichert sind, wobei die Vorrichtung zudem einen elektronischen mit dem Server (1) verbundenen Prozessor (4), einen Umkleideraum (5), der einen Benutzerstationsbereich (6) begrenzt, einen Monitor (7), der im Umkleideraum (5) installiert und mit dem Prozessor (4) verbunden ist, mindestens zwei Webcams (8, 9) umfasst, die gegenüberliegende Einzelbildansichten des Stationsbereichs (6) aufweisen und mit dem Prozessor (4) verbunden sind, wobei die erste Webcam (8) an derselben Wand (16) des Raums (5) installiert ist, in dem der Monitor (7) installiert ist, während die zweite Webcam (9) an einer gegenüberliegenden Wand (17) des Umkleideraums (5) installiert ist, ein Lesegerät (10) von Warencodes, das in der Umkleidekabine (5) installiert und mit dem Prozessor (4) verbunden ist, und automatische Aktivierungs- und Deaktivierungsmittel einer Warenverkaufsangebotssitzung auf dem Monitor (7), wobei die automatischen Aktivierungs- und Deaktivierungsmittel die Webcams (8, 9) umfassen, die die Aktivierung der Sitzung ermöglichen, wenn sie eine Anwesenheit von Benutzern im Umkleideraum (5) erfassen, und Deaktivierung der Sitzung, wenn sie eine Abwesenheit von Benutzern im Umkleideraum (5) erfassen, wobei der Monitor (7) einen Touchscreen (11) zum Empfang von Eingaben von im Umkleideraum (5) anwesenden Benutzern aufweist, wobei der Monitor (7) zudem mindestens einen Spiegelmodus aufweist, in dem er das von der ersten oder zweiten Webcam (8, 9) aufgenommene Bild und mindestens einen Anzeigemodus von zum Verkauf angebotenen Waren selektiv in Echtzeit anzeigt, wobei der Server (1) ein Schnittstellenprogramm zur Schnittstellenbildung mit einer mobilen Anwendung aufweist, die in mobilen elektronischen Geräten (15) von Benutzern installiert ist, wobei das Schnittstellenprogramm mindestens zur Erfassung von Selfie-Fotos mittels der Webcams (8, 9) und deren Übertragung an die mobilen elektronischen Geräte (15) der Benutzer konfiguriert ist, wobei die Selfie-Fotos in/von der installierten mobilen Anwendung empfangen werden.

2. Vorrichtung zur Erstellung eines Warenverkaufsangebots nach Anspruch 1, **dadurch gekennzeichnet, dass** der Prozessor (4) so programmiert ist, dass die Datenbank (3) während einer Warenverkaufsangebotssitzung nach Empfang einer Eingabe durch die Benutzer auf dem Touchscreen (11) nach Erfassung eines Warencodes durch das Lesegerät (10) automatisch in Echtzeit abgefragt wird, woraus Warencodes (3) der Datenbank automatisch extrapoliert werden, die in den Statistiken ein Ähnlichkeitskriterium mit dem erfassten Warencode aufweisen, und auf dem Bildschirm (11) werden in dem Anzeigemodus auch die Waren, die den extrapolierten Warencodes entsprechen, automatisch für das Verkaufsangebot angezeigt.

3. Vorrichtung zur Erstellung eines Warenverkaufsangebots nach einem der vorhergehenden Ansprüche, **dadurch gekennzeichnet, dass** der Server (1) und der Prozessor (4) in einem LAN (Local Area Network) enthalten sind, das in einem Gewerbebetrieb installiert ist.

4. Vorrichtung zur Erstellung eines Warenverkaufsangebots nach dem vorhergehenden Anspruch, **dadurch gekennzeichnet, dass** das LAN (12) ein WLAN (Wi-Fi Local Area Network) ist, das den Server (1) mit mobilen elektronischen Geräten (13) von Betreibern des Gewerbebetriebs verbindet.

5. Vorrichtung zur Erstellung eines Warenverkaufsangebots nach einem der vorhergehenden Ansprüche 4 und 5, **dadurch gekennzeichnet, dass** das LAN (12) in einem WAN (Wide Area Network) enthalten ist, das über das Internet eine Vielzahl an in entsprechenden Gewerbebetrieben installierten LANs (12, 12', 12") verbindet.

6. Vorrichtung zur Erstellung eines Warenverkaufsangebots nach einem der vorhergehenden Ansprüche, **dadurch gekennzeichnet, dass** der Server (1) oder der elektronische Prozessor (4) eine Erweiterte-Realität-Software aufweisen, die zur Überlagerung des aufgenommenen Bildes mit einem dynamischen Hintergrund konfiguriert ist.

7. Vorrichtung zur Erstellung eines Warenverkaufsangebots nach einem der vorhergehenden Ansprüche, **dadurch gekennzeichnet, dass** der Server (1) oder der elektronische Prozessor (4) eine Erweiterte-Realität-Software aufweisen, die zur Überlagerung des aufgenommenen Bildes mit einem statischen Hintergrund konfiguriert ist.

8. Vorrichtung zur Erstellung eines Warenverkaufsangebots nach einem der vorhergehenden Ansprüche, **dadurch gekennzeichnet, dass** der Server (1) oder der elektronische Prozessor (4) eine Erweiterte-Realität-Software aufweisen, die konfiguriert ist, um ein virtuelles Element an ein dynamisches Element des aufgenommenen Bildes anzuhängen.

## Revendications

1. Appareil de réalisation d'une offre de vente de marchandises comprenant un serveur (1) relié à l'Internet (14), un portail Internet (2) pour des marchandises offertes à la vente, une base de données (3) reliée au dit serveur (1), **caractérisé en ce que** dans ledit serveur (1) se trouvent des codes stockés des marchandises offertes à la vente sur ledit portail (2) et au moins des statistiques d'accès des utilisateurs du portail (2) aux codes des marchandises offertes à la vente sur ledit portail (2), ledit appareil comprenant de plus un processeur électronique (4) relié au dit serveur (1), une cabine d'essayage (5) délimitant une zone de stationnement (6) de l'utilisateur, un moniteur (7) installé dans ladite cabine d'essayage (5) et relié au processeur (4), au moins deux webcams (8, 9) ayant des cadrages opposés de ladite zone de stationnement (6) et reliées au dit processeur (4), ladite première webcam (8) étant installée sur un même mur (16) de ladite cabine (5) où ledit moniteur (7) est installé alors que la seconde webcam (9) est installée sur un mur opposé (17) de ladite cabine d'essayage (5), un lecteur (10) des codes de marchandises installé dans ladite cabine d'essayage (5) et relié au dit processeur (4), et des moyens d'activation et de désactivation automatiques sur ledit moniteur (7) d'une session d'offre à la vente de marchandises, lesdits moyens d'activation et de désactivation automatiques comprenant lesdites webcams (8, 9) qui permettent l'activation de la session lorsqu'elles détectent une présence d'utilisateurs dans la cabine d'essayage (5) et la désactivation de la session lorsqu'elles détectent l'absence d'utilisateurs dans la cabine d'essayage (5), ledit moniteur (7) comportant un écran tactile (11) pour recevoir des entrées des utilisateurs présents dans la cabine d'essayage (5), ledit moniteur (7) présentant de plus au moins un mode miroir dans lequel il affiche sélectivement en temps réel l'image capturée par ladite première ou seconde webcam (8, 9) et au moins un mode d'affichage des marchandises offertes à la vente, ledit serveur (1) comportant un programme d'interfaçage pour interfacer avec une application mobile installée dans des dispositifs électroniques (15) mobiles d'utilisateurs, ledit programme d'interfaçage étant configuré au moins pour l'acquisition de photos selfie au moyen desdites webcams (8, 9) et leur transmission auxdits dispositifs électroniques (15) mobiles desdits utilisateurs où les photos selfie sont reçues dans/par l'application mobile installée.

2. Appareil de réalisation d'une offre de vente de marchandises selon la revendication 1, **caractérisé en ce que** ledit processeur (4) est programmé de manière à ce que pendant une session d'offre de vente de marchandises, à réception d'une entrée par lesdits utilisateurs sur l'écran tactile (11) suite à l'acquisition d'un code de marchandise par ledit lecteur (10), ladite base de données (3) est automatiquement interrogée en temps réel, des codes de marchandises étant automatiquement extrapolés, de ladite base de données (3), ayant, dans lesdites statistiques, un critère de similarité avec le code de marchandises acquis, et sur l'écran (11), dans ledit mode d'affichage, les marchandises correspondant auxdits codes de marchandises extrapolés sont aussi automatiquement affichées pour l'offre de vente.

3. Appareil de réalisation d'une offre de vente de marchandises selon l'une quelconque des revendications précédentes, **caractérisé en ce que** ledit serveur (1) et ledit processeur (4) sont inclus dans un LAN (réseau local) installé dans une entreprise commerciale.

4. Appareil de réalisation d'une offre de vente de marchandises selon la revendication précédente, **caractérisé en ce que** ledit LAN (12) est un WLAN (réseau local sans fil) qui relie ledit serveur (1) aux dispositifs électroniques mobiles (13) d'opérateurs de ladite entreprise commerciale.

5. Appareil de réalisation d'une offre de vente de marchandises selon l'une quelconque des revendications 4 et 5, **caractérisé en ce que** ledit LAN (12) est inclus dans un WAN (réseau étendu) qui, via l'Internet, relie une pluralité de LAN (12, 12', 12") installés dans des entreprises commerciales correspondantes.

6. Appareil de réalisation d'une offre de vente de marchandises selon l'une quelconque des revendications précédentes, **caractérisé en ce que** ledit serveur (1) ou ledit processeur électronique (4) comporte un logiciel de réalité augmentée configuré pour superposer un arrière-plan dynamique sur ladite image capturée.

7. Appareil de réalisation d'une offre de vente de marchandises selon l'une quelconque des revendications précédentes, **caractérisé en ce que** ledit serveur (1) ou ledit processeur électronique (4) comporte un logiciel de réalité augmentée configuré pour superposer un arrière-plan statique sur ladite image capturée.

8. Appareil de réalisation d'une offre de vente de marchandises selon l'une quelconque des revendications précédentes, **caractérisé en ce que** ledit serveur (1) ou ledit processeur électronique (4) comporte un logiciel de réalité augmentée configuré pour accrocher un élément virtuel sur un élément dynamique de ladite image capturée.
